# EUROPÄISCHE PATENTSCHRIFT

(11) **EP 4 431 161 B1**
(45) Veröffentlichungstag und Bekanntmachung des Hinweises auf die Patenterteilung: **08.10.2025**
(21) Anmeldenummer: 24191457.1
(22) Anmeldetag: 11.12.2019
(51) Int. Cl.: F16G 11/10, A62B 35/00, A62B 1/14

(54) **BREMSSCHEIBE FÜR EINE SEILBREMSE ZUM SEILKLETTERN, SEILBREMSE ZUM SEILKLETTERN, UND VERFAHREN ZUM NACHRÜSTEN EINER SEILBREMSE**
BRAKE DISC FOR A CABLE BRAKE FOR CABLE CLAMPING, CABLE BRAKE FOR CABLE CLAMPING AND METHOD FOR RETROFITTING A CABLE BRAKE
DISQUE DE FREIN POUR UN FREIN À CORDE DESTINÉ À L'ESCALADE À LA CORDE, FREIN À CORDE DESTINÉ L'ESCALADE À LA CORDE, ET PROCÉDÉ DE MISE À NIVEAU D'UN FREIN À CORDE

(43) Veröffentlichungstag der Anmeldung: 18.09.2024
(62) Teilanmeldung aus: 19215073.8
(73) Patentinhaber: BAUERandMORE GmbH, 64319 Pfungstadt (DE)
(72) Erfinder: BAUER, Matthias, N.,, 64319 Pfungstadt (DE)
(74) Vertreter: Herrmann, Daniel

(56) Entgegenhaltungen:
- WO-A1-2010/141988
- DE-A1- 2 439 637
- GB-A- 2 441 140
- JP-A- S4 925 798
- US-A1- 2012 261 212
- US-A1- 2014 020 988

## Beschreibung

### Technisches Gebiet

Die hier beschriebene Erfindung betrifft eine Bremsscheibe für eine Seilbremse zum Seilklettern. Ferner betrifft die Erfindung eine Seilbremse zum Seilklettern mit der Bremsscheibe und ein Verfahren zum Nachrüsten einer Seilbremse mit der Bremsscheibe.

### Stand der Technik

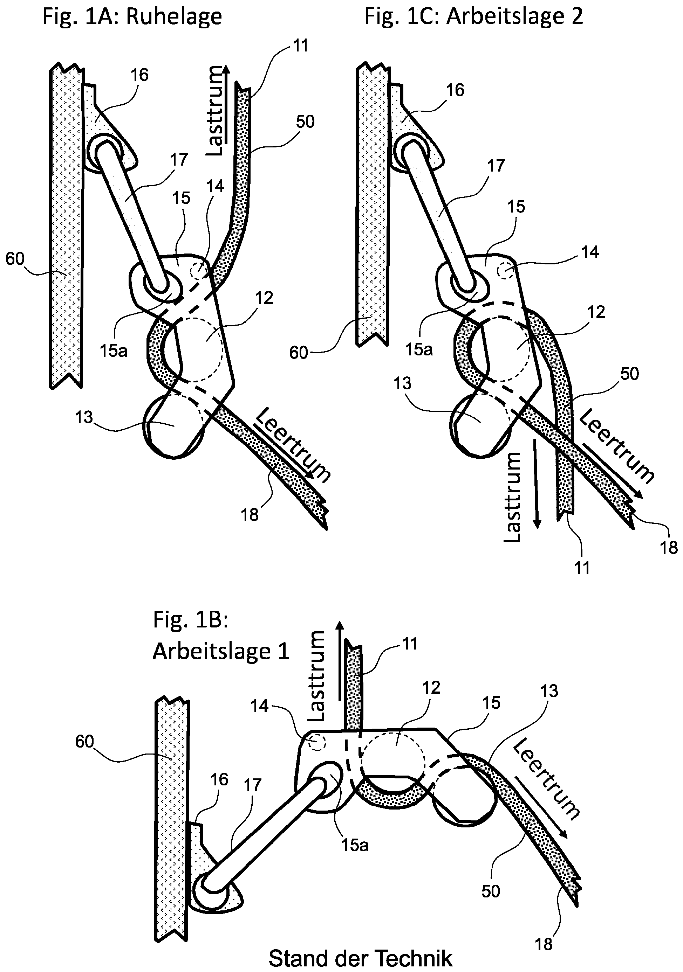

Eine aus dem Stand der Technik bekannte Seilbremse ist in den Figuren 1A bis 1C dargestellt. Diese aus dem Stand der Technik bekannte Seilbremse weist eine kreisförmige Bremsscheibe 12 und eine kreisförmige Steuerscheibe 13 auf entlang der bzw. um die das Seil 50 durch die Seilbremse verläuft. Die Bremsscheibe 12 und die Steuerscheibe 13 haben somit jeweils die Kontur bzw. den Umriss eines Kreises. Das Seil 50 weist ein erstes Seilende 18 auf, welches an dem Sicherer befestigt ist, der in der Regel am Boden steht. Das Seil 50 weist ferner ein zweites Seilende 11 auf, welches an dem Kletterer befestigt ist. Das zweite Seilende 11 ist somit das Seilende, welches gezogen wird und stramm sein kann und wird deshalb als Lasttrum bezeichnet. Das erste Seilende 18 ist hingegen das lose, nicht gezogene, durchhängende Seilende und wird deshalb als Leertrum bezeichnet. Die Seilbremse umfasst ferner üblicherweise einen Sicherheitsbolzen 14 und eine Wange 15, die eine Öffnung 15a zum Hindurchführen eines Karabiners 17 aufweist, wobei der Karabiner 17 wiederum an einer (Fels-)Wand 60 befestigten Lasche 16 befestigt ist. Die Seilbremse hängt üblicherweise an einer Zwischensicherung. Ein anderes Beispiel aus dem Stand der Technik ist GB2441140A.

Dies Seilbremse kann sich prinzipiell in drei Lagen befinden, nämlich der in Figur 1A dargestellten Ruhelage und den in den Figuren 1A und 1B dargestellten Arbeitslagen 1 und 2. In der Ruhelage läuft das Seil 50 lastfrei durch die Seilbremse und es entsteht nur wenig Reibung an der Bremsscheibe 12 und der Steuerscheibe 13. Während in der Arbeitslage 1 das Seil 50 noch durch ein oberhalb des Seilbremse an der Wand 60 befindlichen weiteren Karabiner hindurch läuft, ist dies bei der Arbeitslage 2 nicht der Fall und die Seilbremse dient in der Arbeitslage 2 als Umlenkung wie in Figur 1C dargestellt.

Ein Sturz eines Kletterers beim Seilklettern kann prinzipiell in drei Phasen aufgeteilt werden. In der ersten Phase verliert der Kletterer den Halt und beginnt zu stürzen. Der Sicherer bemerkt ggf. den Sturz vom Kletterer und bereitet sich auf den Fangstoß vor. In der zweiten Phase spannt sich das Seil 50 zwischen dem Kletterer und dem Sicherer und zwischen der Bremsscheibe 12 und der Steuerscheibe 13. Die Seilbremse dreht sich über die Normalkraft zwischen Bremsscheibe 12 bzw. Steuerscheibe 13 und Seil 50 ein (siehe Fig. 1B). Die Seilbremse wird mitgezogen bis die Zwischensicherung, wie beispielsweise Karabiner 17 und Lasche 16, die Seilbremse zurückhält. Der Sicherer wird durch die kinematische Energie vom Kletterer etwas mitgerissen, die Seildehnung dient als Dämpfung für den Kletterer und Sicherer. Das ist der Moment vom Fangstoß bzw. Sturzzug. Der Sicherer wird auf die Geschwindigkeit vom fallenden Kletterer beschleunigt. In der dritten Phase wird über die Reibung im System Seilbremse die kinetische Energie in Wärme und gegebenenfalls andere Energieformen wie potentielle Energie des Sicherers umgewandelt und der fallende Kletterer wird abgebremst.

Durch das Eindrehen der Seilbremse von der Ruhelage in die Arbeitsposition (siehe Fig. 1B) wird das Schlappseil verkürzt. Mit der Spannung vom Seil wird die Seilbremse in die Arbeitsposition gezogen und ein Teil der Energie vom Fangstoß bzw. Sturzzug kann bereits über die Seilbremse aus dem Seil in Form von Reibung ausgekoppelt werden. Ein Teil der Kräfte, die im Seil 50 wirken, werden so lange über die Reibung der Seilbremse aus gekoppelt, ist das System zum Stillstand gekommen ist.

Es hat sich jedoch gezeigt, dass gewisse größere Gewichtsdifferenzen zwischen einem schweren Kletterer und einem leichteren Sicherer dazu führen, dass der Kletterer nur noch schwer durch solche Seilbremsen beim Sturz abgefangen werden kann.

### Kurzbeschreibung der Erfindung

Der Erfindung liegt die Aufgabe zugrunde Mittel zu finden, die es ermöglichen, dass beim Seilklettern Kletterer mit einer noch größere Masse im Vergleich zum Sicherer gesichert werden können.

Diese Aufgabe wird dadurch gelöst, dass die erfindungsgemäße Bremsscheibe anstatt der kreisförmigen Bremsscheibe 12 verwendet wird. Die erfindungsgemäße Bremsscheibe kann in einer aus dem Stand der Technik bekannten Seilbremse, wie die in den Figuren 1A bis 1C beschriebenen Seilbremse, verwendet werden. Die Aufgabe wird deshalb jeweils durch die erfindungsgemäße Bremsscheibe, die erfindungsgemäße Seilbremse und das erfindungsgemäße Verfahren gelöst.

Die erfindungsgemäße Bremsscheibe für eine Seilbremse zum Seilklettern umfasst: einen ersten Abschnitt zur Auflage eines Seils auf der Bremsscheibe, wobei der erste Abschnitt ein erster Kreisbogen eines ersten Kreises mit einem ersten Radius ist; und einen zweiten Abschnitt zur Auflage des Seils auf der Bremsscheibe, wobei der zweite Abschnitt an den ersten Abschnitt angrenzend angeordnet ist; wobei die Bremsscheibe dadurch gekennzeichnet ist, dass der zweite Abschnitt ein zweiter Kreisbogen eines zweiten Kreises mit einem zweiten Radius ist, wobei der zweite Radius größer ist als der erste Radius.

Die erfindungsgemäße Seilbremse zum Seilklettern ist dadurch gekennzeichnet, dass die Seilbremse die erfindungsgemäße Bremsscheibe umfasst.

Das erfindungsgemäße Verfahren ist zum Nachrüsten einer Seilbremse, wobei die Seilbremse eine Befestigungsvorrichtung für eine Bremsscheibe umfasst, das Verfahren umfassend: fixieren der erfindungsgemäße Bremsscheibe an der Befestigungsvorrichtung.

Beschleunigungen auf den Sicherer werden kleiner, wenn die Seilbremse schneller anspricht. Durch einen Hebelarm, der zwischen Drehpunkt der Seilbremse und der getriebenen Bremsscheibe besteht, wird ein Moment aufgebaut, dass die Seilbremse in den Seilverlauf dreht. Diese Drehung nimmt Schlappseil aus dem System und die Umschlingungswinkel des Seils an der Bremsscheibe und der Steuerscheibe werden größer (vgl. Fig. 1A mit Fig. 1B, 1C). Je größer dieser Hebelarm belassen werden kann, desto stärker wird die Seilbremse in den Seilverlauf gezogen. Gemäß der erfindungsgemäßen Bremsscheibe nimmt der Hebelarm gegenüber der aus dem Stand der Technik bekannten kreisförmigen Bremsscheibe 12 während des Eindrehens der Seilbremse nicht so stark bzw. nicht so schnell ab, sodass die Seilbremse schneller und weiter eingedreht werden kann und der Umschlingungswinkel des Seils um die Bremsscheibe und Steuerscheibe größer werden, so dass somit größere Gewichte bzw. Gewichtsdifferenzen durch die Seilbremse beim Sturz des Kletterers durch die Seilbremse auffangbar sind. Durch die erfindungsgemäße Bremsscheibe wird mehr Kraft aus dem Seil ausgekoppelt und weniger Energie vom Fangstoß kommt beim Sicherer an, der dadurch auch weniger beschleunigt wird. Der Sturz wird aus der Sicht des Sicherers somit besser kontrollierbar.

Gemäß bevorzugter Ausführungsformen der erfindungsgemäßen Bremsscheibe hat die Bremsscheibe ferner einen dritten Abschnitt zur Auflage des Seils auf der Bremsscheibe, wobei der dritte Abschnitt ein dritter Kreisbogen eines dritten Kreises mit einem dritten Radius ist, wobei der dritte Abschnitt an den ersten Abschnitt angrenzend angeordnet ist und wobei der dritte Radius kleiner ist als der erste Radius, wodurch die oben beschriebenen positiven Effekte noch verstärkt werden.

Gemäß bevorzugter Ausführungsformen der erfindungsgemäßen Bremsscheibe ist der zweite Abschnitt ein Abschnitt der Oberfläche der Bremsscheibe ist und weist einen Seilkanal mit wellenförmiger Kontur auf, wodurch sich das Seil beim Sturz des Kletterers an die Bremsscheibe anpasst und die Reibwerte, insbesondere in der Arbeitslage 2 (Fig. 1C), zusätzlich erhöht werden.

Diese optionalen bevorzugten Merkmale sind miteinander kombinierbar. Weitere optionale bevorzugte Merkmale sind in dem folgenden Teil der Beschreibung beschrieben, wodurch sich weitere Vorteile für den Fachmann ergeben.

### Kurzbeschreibung der Zeichnungen

Figur 1A zeigt die Ruhelage einer aus dem Stand der Technik bekannten Seilbremse.
Figur 1B zeigt eine erste Arbeitslage der aus dem Stand der Technik bekannten Seilbremse.
Figur 1C zeigt eine zweite Arbeitslage der aus dem Stand der Technik bekannten Seilbremse.
Figur 2 zeigt die erfindungsgemäße Bremsscheibe 10 in einem Zustand, in dem sie in die erfindungsgemäße Seilbremse 100 eingebaut ist und sich exemplarisch in der Arbeitslage gemäß Figur 1C befindet.
Figur 3 zeigt die erfindungsgemäße Bremsscheibe 10.
Figur 4 zeigt die erfindungsgemäße Bremsscheibe 10 in einer bevorzugten Ausführungsform.
Figur 5 zeigt die erfindungsgemäße Bremsscheibe 10 in einer bevorzugten Ausführungsform der Bremsscheibe 10 wie in Figur 3 dargestellt.
Figur 6A zeigt eine Ansicht von vorne auf die erfindungsgemäße Bremsscheibe 10 in der bevorzugten Ausführungsform gemäß Figur 5.
Figur 6B zeigt einen vertikalen Schnitt durch die Ausführung der erfindungsgemäßen Bremsscheibe in der bevorzugten Ausführungsform gemäß Figur 2A entlang der in Figur 2A gezeigten Achse A-A.

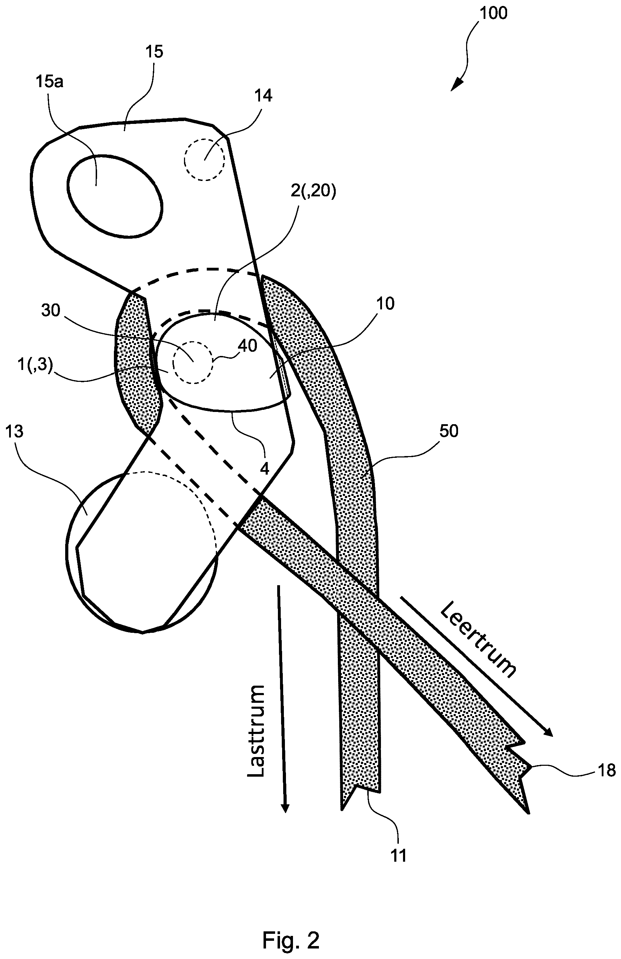

Merkmale mit gleichen Referenzzeichen in den Figuren 1A bis 6B sind identisch, sodass die im Rahmen von den Figuren 1A bis 1C beschriebenen Merkmale ebenso für die Figuren 2 bis 6B zutreffen, sofern sie dort mit gleichen Referenzzeichen verwendet werden.

### Detaillierte Beschreibung

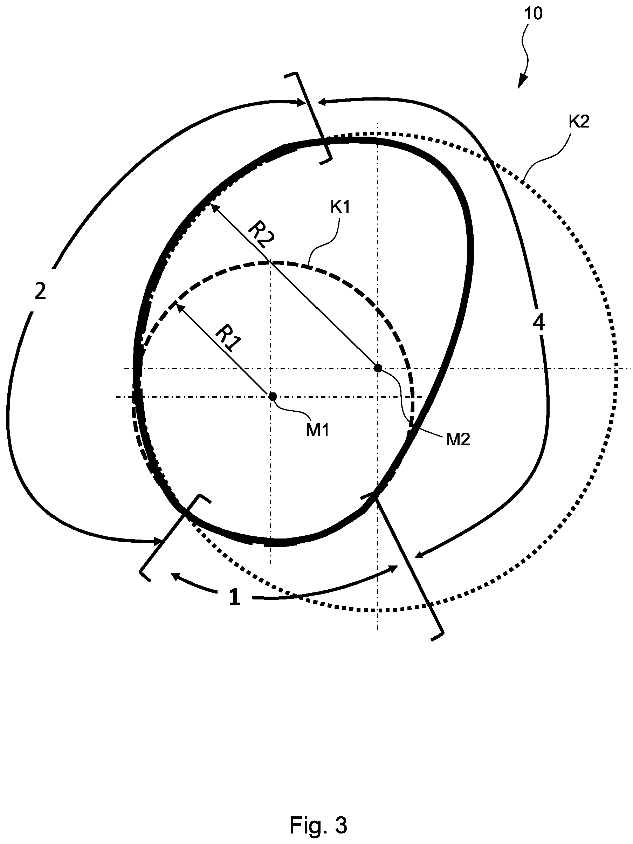

Figur 3 zeigt die erfindungsgemäße Bremsscheibe 10 für eine Seilbremse 100 zum Seilklettern. Figur 2 zeigt die erfindungsgemäße Bremsscheibe 10 in einem Zustand, in dem sie in die erfindungsgemäße Seilbremse 100 eingebaut ist und sich exemplarisch in der Arbeitslage gemäß Figur 1C befindet.

Die Bremsscheibe umfasst: einen ersten Abschnitt 1 zur Auflage eines Seils 50 auf der Bremsscheibe 10, wobei der erste Abschnitt 1 ein erster Kreisbogen eines ersten Kreises K1 mit einem ersten Radius R1 ist; und einen zweiten Abschnitt 2 zur Auflage des Seils 50 auf der Bremsscheibe 10, wobei der zweite Abschnitt 2 an den ersten Abschnitt 1 angrenzend angeordnet ist; wobei die Bremsscheibe 10 dadurch gekennzeichnet ist, dass der zweite Abschnitt 2 ein zweiter Kreisbogen eines zweiten Kreises K2 mit einem zweiten Radius R2 ist, wobei der zweite Radius R2 größer ist als der erste Radius R1, wobei bevorzugt das Verhältnis des zweiten Radius zum ersten Radius (etwa) 1 zu 1/2 ist.

Der erste Abschnitt 1 und der zweite Abschnitt 2 können Abschnitte der Oberfläche der Bremsscheibe 10 sein und der zweite Abschnitt 2 kann aus Sicht von Leertrum 18 des Seiles zu Lasttrum 11 des Seiles dem ersten Abschnitt 1 nachfolgend angeordnet sein. Das zweite Seilende 11 ist das Seilende, welches gezogen wird und stramm sein kann und wird deshalb als Lasttrum bezeichnet. Das erste Seilende 18 ist hingegen das lose, nicht gezogene, durchhängende Seilende und wird deshalb als Leertrum bezeichnet. Das erste Seilende 18 kann auch als in die Seilbremse 100 bzw. Bremsscheibe 10 einlaufende Seil 50 bezeichnet werden und das zweite Seilende 11 kann auch als aus der Seilbremse 100 bzw. Bremsscheibe 10 auslaufende Seil 50 bezeichnet werden. Das Seilende 11 ist zur Anbringung an den Kletterer und das Seilende 18 ist zur Anbringung an den Sicherer. Seilbremse hat üblicherweise eine weitere Scheibe 13 (Steuerscheibe) und die Bremsscheibe 10 und die weitere Scheibe sind derart innerhalb der Seilbremse 100 angeordnet, dass das Seil 50 aus Richtung Sicherer (Leertrum) über die weitere Scheibe 13 in die Seilbremse 100 einführbar ist, auf den ersten Abschnitt 1 der Bremsscheibe geführt wird und an der Bremsscheibe 10 umgelenkt wird, um die Seilbremse 100 in Richtung Kletterer (Lasttrum) zu verlassen.

Der erste Kreisbogen und der zweite Kreisbogen können aneinander angrenzend angeordnet sein und sind bevorzugt durch eine Tangente 25a, 25c miteinander verbunden.

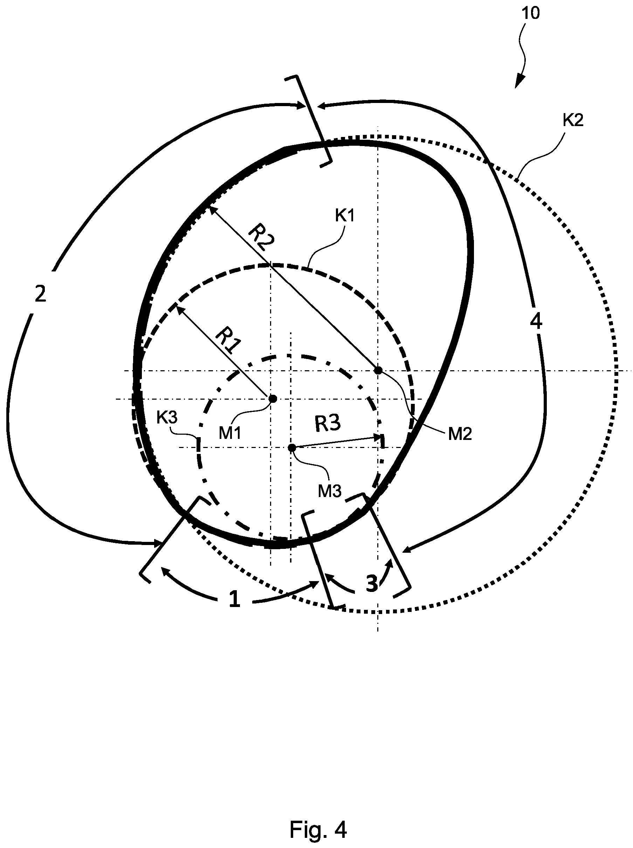

Wie in Figur 4 in einer bevorzugten Ausführungsform gezeigt, kann die Bremsscheibe 10 ferner einen dritten Abschnitt 3 zur Auflage des Seils 50 auf der Bremsscheibe 10 umfassen, wobei der dritte Abschnitt 3 ein dritter Kreisbogen eines dritten Kreises K3 mit einem dritten Radius R3 ist, wobei der dritte Abschnitt 3 an den ersten Abschnitt 1 angrenzend angeordnet ist und wobei der dritte Radius R3 kleiner ist jeweils als der erste Radius R1 und der zweite Radius R2, wobei für die Wirkung der Bremsscheibe besonders bevorzugt das Verhältnis des zweiten Radius zum ersten Radius zum dritten Radius (etwa) 1 zu ½ zu 1/3 ist.

Der dritte Abschnitt 3 kann ein Abschnitt der Oberfläche der Bremsscheibe 10 sein und der erste Abschnitt 1 kann aus Sicht von Leertrum 18 des Seiles zu Lasttrum 11 des Seils 50 dem dritten Abschnitt 3 nachfolgend (und angrenzend) angeordnet sein. Der erste Kreisbogen und der dritte Kreisbogen können aneinander angrenzend angeordnet sein und sind bevorzugt durch eine Tangente miteinander verbunden.

Der erste Abschnitt 1, der zweite Abschnitt 2 und ggf. der dritte Abschnitt 3 können als die Vorderseite der Bremsscheibe 10 bezeichnet werden, während der in den Figuren 2 bis 6B dargestellte vierte Abschnitt 4 als die Rückseite der Bremsscheibe 10 bezeichnet werden kann. Die Form von Abschnitt 4 kann beliebig sein. Das Seil 50 läuft, gegebenenfalls ohne den vierten Abschnitt 4 zu berühren, in die Seilbremse 100 ein und läuft über die Abschnitte 1, 2 und ggf. 3 der Bremsscheibe 10, auf denen das Seil 50 aufliegt, wieder aus der Seilbremse 100 heraus.

In jeder der durch Figuren 2 bis 6B beschriebenen Ausführungsformen können die Mittelpunkte M1, M2 bzw. M3 der Kreise K1, K2 bzw. K3 räumlich getrennt voneinander angeordnet sein. Die in den Figuren gezeigten Anordnungen der Mittelpunkte sind für die Erfindung beispielhaft aber nicht wesentlich.

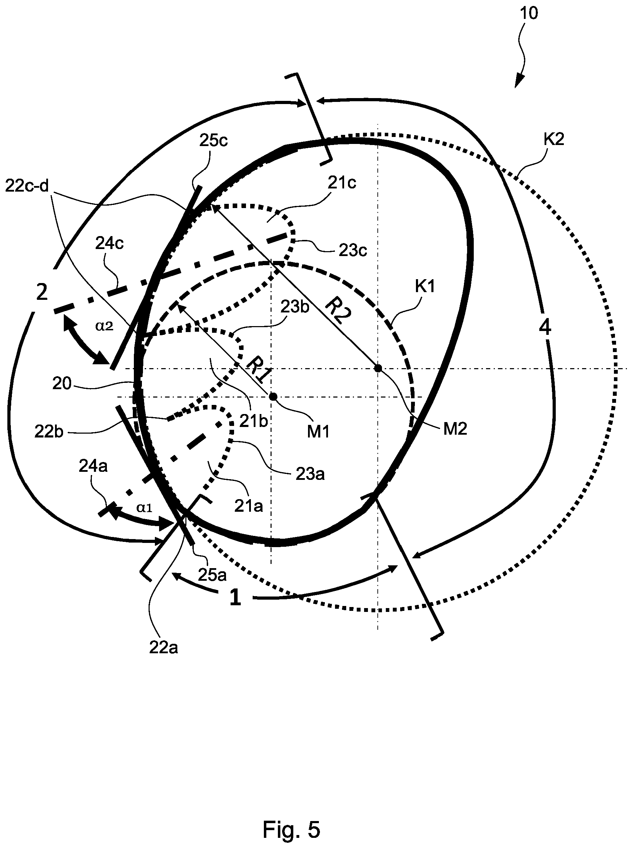

In jeder der durch Figuren 2 bis 4 beschriebenen Ausführungsformen kann der zweite Abschnitt 2 ein Abschnitt der Oberfläche der Bremsscheibe 10 sein und einen Seilkanal 20 mit wellenförmiger Kontur aufweisen, wie er auch in den Figuren 5 bis 6B dargestellt und beschrieben ist.

Figur 5 zeigt die erfindungsgemäße Bremsscheibe 10, wie in Figur 3 dargestellt, zusätzliche mit Seilkanal 20.

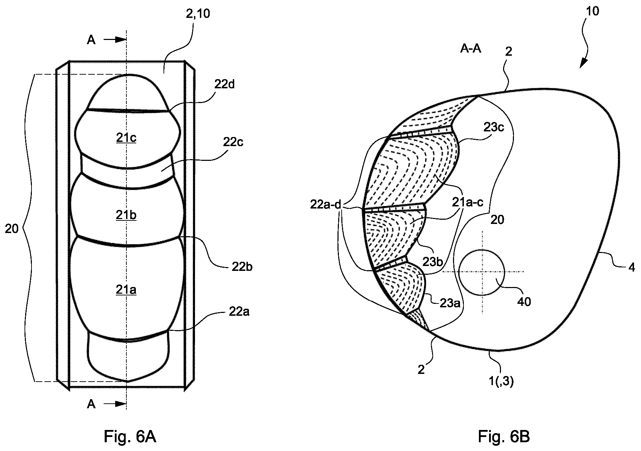

Figur 6A zeigt eine Ansicht von vorne auf die erfindungsgemäße Bremsscheibe 10 in der bevorzugten Ausführungsform gemäß Figur 5. Figur 6B zeigt einen vertikalen Schnitt durch die Ausführung der erfindungsgemäßen Bremsscheibe in der bevorzugten Ausführungsform gemäß Figur 2A entlang der in Figur 2A gezeigten Achse A-A.

Wie Figuren 5 bis 6B zeigen, kann der Seilkanal 20 eine oder mehrere (beliebig viele) Aussparungen 21a, 21b, 21c an der Oberfläche der Bremsscheibe 10 aufweisen, wobei jede der Aussparungen 21a, 21b, 21c durch zwei Verengungen 22a, 22b, 22c, 22d begrenzt werden kann. Der Seilkanal 20 kann zudem ein oder mehrere Aussparungen aufweisen, die nur an einer Seite durch eine Verengung 22a, 22d beschränkt sind und an einem anderen Ende in die Oberfläche von Abschnitt 2 der Bremsscheibe 10 auslaufen.

Die ein oder mehreren Aussparungen 21a, 21b, 21c mit den jeweils angrenzend angeordneten Verengungen 22a, 22b, 22c, 22d können dabei derart angepasst sein, dass im Lastfall die Seilstruktur oder der Mantel des in dem Seilkanal 20 aufliegenden Seils 50 gestaucht und der Abschnitt des Seils 50 mit der gestauchte Seilstruktur oder des gestauchten Seilmantels in ein oder mehrere der Aussparungen 21a, 21b, 21c gedrückt wird.

Die ein oder mehreren Aussparungen 21a, 21b, 21c können dabei eine erste Aussparung 21a, 21b und eine zweite Aussparung 21b, 21c umfassen, wobei aus Sicht von Leertrum 18 des Seils 50 zu Lasttrum 11 des Seils 50 die zweite Aussparung 21b, 21c der ersten Aussparung 21a, 21b nachfolgend, und vorzugsweise angrenzend (wie bei Aussparung 21b in Bezug auf Aussparung 21a oder bei Aussparung 21c in Bezug auf Aussparung 21b), auf der Oberfläche der Bremsscheibe 10 angeordnet ist und sich zwischen der ersten Aussparung 21a, 21b und der zweiten Aussparung 21b, 21c eine (22b bzw. 22c) der Verengungen 22a, 22b, 22c, 22d befindet, die die erste Aussparung 21a von der zweiten Aussparung 21b, 21c abgrenzt.

Das Seil 50 kann auf der dem Leertrum 18 des Seils 50 zugewandten Seite jeder der Verengungen 22a, 22b, 22c, 22d auf die Verengung auflaufen und an der dem Lasttrum 11 des Seils 50 zugewandten Seite jeder der Verengungen 22a, 22b, 22c, 22d an der Verengung ablaufen.

Die ein oder mehreren Aussparungen 21a, 21b, 21c mit den jeweils angrenzend angeordneten Verengungen 22a, 22b, 22c, 22d können dabei derart angepasst sein, dass im Lastfall die Seilstruktur oder der Mantel des in dem Seilkanal 20 aufliegenden Seils 50 innerhalb einer ersten der Aussparungen 21a, 21b, 21c mehr gestaucht und das gestauchte Seil 50 mehr in die Aussparung reingedrückt bzw. reingezogen wird als innerhalb einer zweiten der Aussparungen 21a, 21b, 21c.

Das Seil 50 wird beim Sturz des Kletterers in den wellenförmige Seilkanal 20 gezogen. Über die Reibung an den Flanken der ein oder mehreren Aussparungen in dem Seilkanal 20 wird die Seilstruktur verformt bzw. gestaucht oder der Seilmantel gegenüber dem Seilkern zurückgeschoben bzw. gestaucht. Der Abschnitt des Seils 50 mit verformter Seilstruktur bzw. zurückgeschobenen oder gestauchten Seilmantel drückt sich in ein oder mehrere der Aussparungen 21a-c im Seilkanal und erhöht dadurch die auf das Seil 50 wirkende Reibungskraft.

Sowohl die Kontur 23a der ersten Aussparung 21a als auch die Kontur 23b, 23c der zweiten Aussparung 21b, 21c können dabei jeweils die Form eines Oberflächenabschnitt eines Ellipsoids aufweisen, wobei zwischen einer Hauptachse 24a des Ellipsoids der ersten Aussparung 21a und einer Tangente 25a an den zweiten Kreisbogen im Bereich der ersten Aussparung 21a ein erster Winkel α1 gegeben ist, wobei zwischen einer Hauptachse 24c des Ellipsoids der zweiten Aussparung 21c und einer Tangente 25c an den zweiten Kreisbogen im Bereich der zweiten Aussparung 21c ein zweiter Winkel α2 gegeben ist, und wobei der erste Winkel α1 größer ist als der zweite Winkel α2, wobei der erste Winkel und der zweite Winkel jeweils für die Wirkung der Bremsscheibe besonders bevorzugt zwischen 10° und 90° sind.

Da die Hauptachsen 24a, 24c parallel zueinander verlaufen verändert, sich der Winkel α zwischen Tangente 25a, 25c und Hauptachse 24a, 24c derart, dass die Steigung die die Verengungen 22a-d dem auflaufenden Seil 50 entgegenstellen zunächst steil sind und dann immer flacher werden und das Seil 50 wird dadurch entlang des zweiten Abschnitts 2 aus Richtung von Leertrum zu Lasttrum zunächst stark in die jeweilige Aussparung 21a-c gedrückt und dann in Richtung Lasttrum gesehen immer weniger in die jeweilige Aussparung 21a-c eingezogen. Wird das Seil 50 belastet, entsteht dadurch eine erhöhte auf das Seil 50 wirkende Reibungskraft. Wird das Seil 50 entlastet, kann dadurch das Seil 50 aber frei wieder aus dem Seilkanal 20 abgehoben werden.

Die erfindungsgemäße Seilbremse 100 zum Seilklettern ist dabei dadurch gekennzeichnet, dass die Seilbremse 100 die erfindungsgemäße Bremsscheibe 10 nach irgendeiner der hierin beschriebenen Ausführungsformen umfasst.

Das erfindungsgemäße Verfahren ist zum Nachrüsten einer Seilbremse 100, wobei die Seilbremse 100 eine Befestigungsvorrichtung 30 (z.B. eine Schraube) für eine Bremsscheibe umfasst, das Verfahren umfassend: fixieren der erfindungsgemäßen Bremsscheibe 10 nach irgendeiner der hierin beschriebenen Ausführungsformen an der Befestigungsvorrichtung 30. Die erfindungsgemäße Bremsscheibe kann eine Öffnung 40 zum Befestigen an der Befestigungsvorrichtung 30 aufweisen. Die erfindungsgemäße Bremsscheibe kann aus einem Metall angefertigt werden.

Die hierin erwähnten Zahlenwerte sind für die Erfindung beispielhaft aber nicht wesentlich.

In der detaillierten Beschreibung und in den Zeichnungen sind bevorzugte Ausführungsformen und Aspekte der durch die folgenden Ansprüche gegebenen Erfindung beschrieben. Die in der vorstehenden Beschreibung, den Ansprüchen und den Zeichnungen offenbarten (optionalen bzw. bevorzugten) Merkmale können sowohl einzeln als auch in beliebiger Kombination für die Ausführung der hier gemäß der beiliegenden Ansprüche gegebenen Erfindung in Ausgestaltungen der Erfindung Verwendung finden.

## Patentansprüche

1. Eine Bremsscheibe (10) für eine Seilbremse (100) zum Seilklettern, die Bremsscheibe (10) umfassend:
einen ersten Abschnitt (1) zur Auflage eines Seils (50) auf der Bremsscheibe (10), wobei der erste Abschnitt (1) ein erster Kreisbogen eines ersten Kreises (K1) mit einem ersten Radius (R1) ist;
einen zweiten Abschnitt (2) zur Auflage des Seils (50) auf der Bremsscheibe (10), wobei der zweite Abschnitt (2) an den ersten Abschnitt (1) angrenzend angeordnet ist;
wobei der zweite Abschnitt (2) ein zweiter Kreisbogen eines zweiten Kreises (K2) mit einem zweiten Radius (R2) ist, wobei der zweite Radius (R2) größer ist als der erste Radius (R1), und
wobei der erste Abschnitt (1) und der zweite Abschnitt (2) Abschnitte der Oberfläche der Bremsscheibe (10) sind und der zweite Abschnitt (2) aus Sicht von Leertrum (18) des Seiles zu Lasttrum (11) des Seiles dem ersten Abschnitt (1) nachfolgend angeordnet ist;
einen dritten Abschnitt (3) zur Auflage des Seils (50) auf der Bremsscheibe (10), **dadurch gekennzeichnet, dass**
der dritte Abschnitt (3) ein dritter Kreisbogen eines dritten Kreises (K3) mit einem dritten Radius (R3) ist, wobei der dritte Abschnitt (3) an den ersten Abschnitt (1) angrenzend angeordnet ist, wobei der dritte Radius (R3) kleiner ist als der erste Radius (R1), und
wobei der dritte Abschnitt (3) ein Abschnitt der Oberfläche der Bremsscheibe (10) ist und der erste Abschnitt (1) aus Sicht von Leertrum (18) des Seiles zu Lasttrum (11) des Seils (50) dem dritten Abschnitt (3) nachfolgend angeordnet ist.

2. Die Bremsscheibe (10) nach irgendeinem der vorangehenden Ansprüche, **dadurch gekennzeichnet, dass** der erste Kreisbogen und der zweite Kreisbogen aneinander angrenzend angeordnet sind und bevorzugt durch eine Tangente (25a, 25c) miteinander verbunden sind.

3. Die Bremsscheibe (10) nach irgendeinem der vorangehenden Ansprüche, **dadurch gekennzeichnet, dass** die Mittelpunkte (M1, M2, M3) der Kreise (K1, K2, K3) räumlich getrennt voneinander angeordnet sind.

4. Die Bremsscheibe (10) nach irgendeinem der vorangehenden Ansprüche, **dadurch gekennzeichnet, dass** der zweite Abschnitt (2) ein Abschnitt der Oberfläche der Bremsscheibe (10) ist und einen Seilkanal (20) mit wellenförmiger Kontur aufweist.

5. Die Bremsscheibe (10) nach Anspruch 4, **dadurch gekennzeichnet, dass** der Seilkanal (20) ein oder mehrere Aussparungen (21a, 21b, 21c) an der Oberfläche der Bremsscheibe (10) aufweist, wobei jede der Aussparungen (21a, 21b, 21c) durch zwei Verengungen (22a, 22b, 22c, 22d) begrenzt wird.

6. Die Bremsscheibe (10) nach Anspruch 5, **dadurch gekennzeichnet, dass** die ein oder mehreren Aussparungen (21a, 21b, 21c) mit den jeweils angrenzend angeordneten Verengungen (22a, 22b, 22c, 22d) derart angepasst sind, dass im Lastfall die Seilstruktur oder der Mantel des in dem Seilkanal (20) aufliegenden Seils (50) gestaucht und der Abschnitt des Seils (50) mit der gestauchte Seilstruktur oder des gestauchten Seilmantels in ein oder mehrere der Aussparungen (21a, 21b, 21c) gedrückt wird.

7. Die Bremsscheibe (10) nach Anspruch 5 oder 6, **dadurch gekennzeichnet, dass** die ein oder mehreren Aussparungen (21a, 21b, 21c) eine erste Aussparung (21a) und eine zweite Aussparung (21b, 21c) umfassen, wobei aus Sicht von Leertrum (18) des Seils (50) zu Lasttrum (11) des Seils (50) die zweite Aussparung (21b, 21c) der ersten Aussparung (21a) nachfolgend auf der Oberfläche der Bremsscheibe (10) angeordnet ist und sich zwischen der ersten Aussparung (21a) und der zweiten Aussparung (21b, 21c) eine der Verengungen (22a, 22b, 22c, 22d) befindet, die die erste Aussparung (21a) von der zweiten Aussparung (21b, 21c) abgrenzt.

8. Die Bremsscheibe (10) nach irgendeinem der Ansprüche 5 bis 7, **dadurch gekennzeichnet, dass** das Seil (50) auf der dem Leertrum (18) des Seils (50) zugewandten Seite jeder der Verengungen (22a, 22b, 22c, 22d) auf die Verengung aufläuft und an der dem Lasttrum (11) des Seils (50) zugewandten Seite jeder der Verengungen (22a, 22b, 22c, 22d) an der Verengung abläuft.

9. Die Bremsscheibe (10) nach irgendeinem der Ansprüche 5 bis 8, **dadurch gekennzeichnet, dass** die ein oder mehreren Aussparungen (21a, 21b, 21c) mit den jeweils angrenzend angeordneten Verengungen (22a, 22b, 22c, 22d) derart angepasst sind, dass im Lastfall die Seilstruktur oder der Mantel des in dem Seilkanal (20) aufliegenden Seils (50) innerhalb einer ersten der Aussparungen (21a, 21b, 21c) mehr gestaucht und das gestauchte Seil (50) mehr in die Aussparung reingedrückt wird als innerhalb einer zweiten der Aussparungen (21a, 21b, 21c).

10. Die Bremsscheibe (10) nach irgendeinem der Ansprüche 7 bis 9, **dadurch gekennzeichnet, dass** sowohl die Kontur (23a) der ersten Aussparung (21a) als auch die Kontur (23b, 23c) der zweiten Aussparung (21b, 21c) jeweils die Form eines Oberflächenabschnitt eines Ellipsoids aufweist, wobei zwischen einer Hauptachse (24a) des Ellipsoids der ersten Aussparung (21a) und einer Tangente (25a) an den zweiten Kreisbogen im Bereich der ersten Aussparung (21a) ein erster Winkel (α1) gegeben ist, wobei zwischen einer Hauptachse (24c) des Ellipsoids der zweiten Aussparung (21c) und einer Tangente (25c) an den zweiten Kreisbogen im Bereich der zweiten Aussparung (21c) ein zweiter Winkel (α2) gegeben ist, und wobei der erste Winkel (α1) größer ist als der zweite Winkel (α2).

11. Eine Seilbremse (100) zum Seilklettern, **dadurch gekennzeichnet, dass** die Seilbremse (100) die Bremsscheibe (10) nach irgendeinem der vorangehenden Ansprüche umfasst.

12. Ein Verfahren zum Nachrüsten einer Seilbremse (100), wobei die Seilbremse (100) eine Befestigungsvorrichtung (30) für eine Bremsscheibe (10) umfasst, das Verfahren umfassend:
fixieren der Bremsscheibe (10) nach irgendeinem der Ansprüche 1 bis 10 an der Befestigungsvorrichtung (30).

## Claims

1. A brake disc (10) for a rope brake (100) for rope climbing, the brake disc (10) comprising:
a first portion (1) for supporting a rope (50) on the brake disc (10), wherein the first portion (1) is a first circular arc of a first circle (K1) having a first radius (R1);
a second portion (2) for supporting the rope (50) on the brake disc (10), wherein the second portion (2) is arranged adjacent to the first portion (1);
wherein the second portion (2) is a second arc of a second circle (K2) having a second radius (R2), wherein the second radius (R2) is larger than the first radius (R1), and
wherein the first portion (1) and the second portion (2) are portions of the surface of the brake disc (10) and the second portion (2) is arranged following the first portion (1) from the view of the slack strand (18) of the rope to the load strand (11) of the rope;
a third portion (3) for supporting the rope (50) on the brake disc (10),
**characterized in that**
the third portion (3) is a third arc of a third circle (K3) having a third radius (R3), wherein the third portion (3) is arranged adjacent to the first portion (1), wherein the third radius (R3) is smaller than the first radius (R1), and
wherein the third portion (3) is a portion of the surface of the brake disc (10) and the first portion (1) is arranged following the third portion (3) from the view of the slack strand (18) of the rope to the load strand (11) of the rope (50).

2. The brake disc (10) according to any one of the preceding claims, **characterized in that** the first arc and the second arc are arranged adjacent to each other and are preferably connected to each other by a tangent (25a, 25c).

3. The brake disc (10) according to any one of the preceding claims, **characterized in that** the centers (M1, M2, M3) of the circles (K1, K2, K3) are arranged spatially separated from each other.

4. The brake disc (10) according to any one of the preceding claims, **characterized in that** the second portion (2) is a portion of the surface of the brake disc (10) and comprises a rope channel (20) with an undulating contour.

5. The brake disc (10) according to claim 4, **characterized in that** the rope channel (20) comprises one or more recesses (21a, 21b, 21c) on the surface of the brake disc (10), wherein each of the recesses (21a, 21b, 21c) is delimited by two narrowings (22a, 22b, 22C, 22d).

6. The brake disc (10) according to claim 5, **characterized in that** the one or more recesses (21a, 21b, 21c) with the respectively adjacently arranged narrowings (22a, 22b, 22c, 22d) are adapted such that in case of load the rope structure or the shell of the rope (50) resting in the rope channel (20) is compressed and the portion of the rope (50) with the compressed rope structure or the compressed rope shell is pressed into one or more of the recesses (21a, 21b, 21c).

7. The brake disc (10) according to claim 5 or 6, **characterized in that** the one or more recesses (21a, 21b, 21c) comprise a first recess (21a) and a second recess (21b, 21c), wherein from the view of the slack strand (18) of the rope (50) to the load strand (11) of the rope (50) the second recess (21b, 21c) is arranged following the first recess (21a) on the surface of the brake disc (10) and between the first recess (21a) and the second recess (21b, 21c) one of the narrowings (22a, 22b, 22c, 22d) is located which delimits the first recess (21a) from the second recess (21b, 21c).

8. The brake disc (10) according to any one of claims 5 to 7, **characterized in that** the rope (50) runs onto the narrowing on the side of each of the narrowings (22a, 22b, 22c, 22d) facing the slack strand (18) of the rope (50) and runs off on the narrowing on the side of each of the narrowings (22a, 22b, 22c, 22d) facing the load strand (11) of the rope (50).

9. The brake disc (10) according to any one of claims 5 to 8, **characterized in that** the one or more recesses (21a, 21b, 21c) with the respectively adjacently arranged narrowings (22a, 22b, 22c, 22d) are adapted such that in case of load the rope structure or the shell of the rope (50) resting in the rope channel (20) is compressed more within a first of the recesses (21a, 21b, 21c) and the compressed rope (50) is pressed more into the recess than within a second of the recesses (21a, 21b, 21c).

10. The brake disc (10) according to any one of claims 7 to 9, **characterized in that** both the contour (23a) of the first recess (21a) and the contour (23b, 23c) of the second recess (21b, 21c) each have the shape of a surface portion of an ellipsoid, wherein a first angle (α1) is given between a main axis (24a) of the ellipsoid of the first recess (21a) and a tangent (25a) to the second arc in the region of the first recess (21a), wherein a second angle (α2) is given between a main axis (24c) of the ellipsoid of the second recess (21c) and a tangent (25c) to the second arc in the region of the second recess (21c), and wherein the first angle (α1) is larger than the second angle (α2).

11. A rope brake (100) for rope climbing, **characterized in that** the rope brake (100) comprises the brake disc (10) according to any one of the preceding claims.

12. A method for retrofitting a rope brake (100), wherein the rope brake (100) comprises a fastening device (30) for a brake disc (10), the method comprising:
fixing the brake disc (10) according to any one of claims 1 to 10 to the fastening device (30).

## Revendications

1. Disque de frein (10) pour un frein à corde (100) destiné à l'escalade à la corde, le disque de frein (10) comprenant:
une première partie (1) pour supporter une corde (50) sur le disque de frein (10), la première partie (1) étant un premier arc de cercle d'un premier cercle (K1) avec un premier rayon (R1);
une deuxième partie (2) pour supporter la corde (50) sur le disque de frein (10), la deuxième partie (2) étant disposée de manière adjacente à la première partie (1);
la deuxième section (2) étant un deuxième arc de cercle d'un deuxième cercle (K2) avec un deuxième rayon (R2), le deuxième rayon (R2) étant plus grand que le premier rayon (R1), et
la première section (1) et la deuxième section (2) étant des sections de la surface du disque de frein (10) et la deuxième section (2) étant disposée à la suite de la première section (1) du point de vue du brin libre (18) de la corde vers le brin chargé (11) de la corde;
une troisième section (3) pour le support de la corde (50) sur le disque de frein (10),
characterisé en ce que la troisième section (3) étant un troisième arc de cercle d'un troisième cercle (K3) avec un troisième rayon (R3), la troisième section (3) étant disposée de manière adjacente à la première section (1), le troisième rayon (R3) étant plus petit que le premier rayon (R1), et
la troisième section (3) étant une section de la surface du disque de frein (10) et la première section (1) étant disposée à la suite de la troisième section (3) du point de vue du brin libre (18) de la corde vers le brin sous charge (11) de la corde (50).

2. Disque de frein (10) selon l'une quelconque des revendications précédentes, **caractérisé en ce que** le premier arc de cercle et le deuxième arc de cercle sont disposés de manière adjacente l'un à l'autre et sont de préférence reliés entre eux par une tangente (25a, 25c).

3. Disque de frein (10) selon l'une quelconque des revendications précédentes, **caractérisé en ce que** les centres (M1, M2, M3) des cercles (K1, K2, K3) sont disposés à distance les uns des autres.

4. Disque de frein (10) selon l'une quelconque des revendications précédentes, **caractérisé en ce que** la deuxième partie (2) est une partie de la surface du disque de frein (10) et comporte un canal de corde (20) avec un contour ondulé.

5. Disque de frein (10) selon la revendication 4, **caractérisé en ce que** le canal de corde (20) comporte un ou plusieurs évidements (21a, 21b, 21c) à la surface du disque de frein (10), chacun des évidements (21a, 21b, 21c) étant délimité par deux rétrécissements (22a, 22b, 22c, 22d).

6. Disque de frein (10) selon la revendication 5, **caractérisé en ce que** le ou les évidements (21a, 21b, 21c) sont adaptés aux rétrécissements (22a, 22b, 22c, 22d) adjacents de telle sorte que, en cas de charge, la structure de la corde ou la gaine de la corde (50) reposant dans le canal à corde (20) est comprimée et la section de la corde (50) avec la structure comprimée de la corde ou la gaine comprimée de la corde est pressée dans un ou plusieurs des évidements (21a, 21b, 21c).

7. Disque de frein (10) selon la revendication 5 ou 6, **caractérisé en ce que** le ou les évidements (21a, 21b, 21c) comprennent un premier évidement (21a) et un deuxième évidement (21b, 21c), le deuxième évidement (21b, 21c) est disposé à la suite du premier évidement (21a) sur la surface du disque de frein (10) et qu'entre le premier évidement (21a) et le deuxième évidement (21b, 21c) se trouve l'un des rétrécissements (22a, 22b, 22c, 22d) qui sépare le premier évidement (21a) du deuxième évidement (21b, 21c).

8. Disque de frein (10) selon l'une quelconque des revendications 5 à 7, **caractérisé en ce que** la corde (50) sur le côté tourné vers le brin libre (18) de la corde (50) de chacun des rétrécissements (22a, 22b, 22c, 22d) sur le rétrécissement et s'écoule sur le rétrécissement du côté de chacun des rétrécissements (22a, 22b, 22c, 22d) tourné vers le brin sous charge (11) de la corde (50).

9. Disque de frein (10) selon l'une quelconque des revendications 5 à 8, **caractérisé en ce que** le ou les évidements (21a, 21b, 21c) sont adaptés aux rétrécissements (22a, 22b, 22c, 22d) adjacents de telle sorte que, en cas de charge, la structure de la corde ou la gaine de la corde (50) reposant dans le canal de corde (20) est davantage comprimée à l'intérieur d'un premier des évidements (21a, 21b, 21c) et que la corde (50) comprimé soit enfoncé davantage dans l'évidement que dans un deuxième des évidements (21a, 21b, 21C).

10. Disque de frein (10) selon l'une quelconque des revendications 7 à 9, **caractérisé en ce que** le contour (23a) du premier évidement (21a) et le contour (23b, 23c) du deuxième évidement (21b, 21c) ont chacun la forme d'une partie de surface d'un ellipsoïde, un premier angle (α1) est formé entre un axe principal (24c) de l'ellipsoïde du deuxième évidement (21c) et une tangente (25c) au deuxième arc de cercle dans la zone du deuxième évidement (21c), et le premier angle (α1) étant plus grand que le deuxième angle (α2).

11. Frein à corde (100) pour l'escalade à la corde, **caractérisé en ce que** le frein à corde (100) comprend le disque de frein (10) selon l'une quelconque des revendications précédentes.

12. Procédé de rééquipement d'un frein à corde (100), le frein à corde (100) comprenant un dispositif de fixation (30) pour un disque de frein (10), le procédé comprenant :
la fixation du disque de frein (10) selon l'une quelconque des revendications 1 à 10 sur le dispositif de fixation (30).
